Europäisches Patentamt

(19) European Patent Office

Office européen des brevets

(11) Numéro de publication: **0 054 008**
**B1**

(12) **FASCICULE DE BREVET EUROPEEN**

(45) Date de publication du fascicule du brevet:
06.02.85

(51) Int. Cl.⁴: **B 60 P 3/00,** B 60 P 1/64

(21) Numéro de dépôt: **81830242.4**

(22) Date de dépôt: **03.12.81**

(54) **Groupe comprenant un véhicule routier de transport et un chevalet amovible pour le transport de plaques.**

(30) Priorité: **09.12.80 IT 6886980**
**14.05.81 IT 5323381 U**

(43) Date de publication de la demande:
**16.06.82 Bulletin 82/24**

(45) Mention de la délivrance du brevet:
**06.02.85 Bulletin 85/6**

(84) Etats contractants désignés:
**AT BE CH DE FR GB LI LU NL SE**

(56) Documents cités:
**DE - A - 1 935 265**
**DE - A - 2 050 251**
**DE - A - 2 653 278**
**FR - A - 1 323 104**
**FR - A - 1 516 897**
**FR - A - 1 541 937**
**FR - A - 1 585 958**
**FR - A - 2 217 202**
**GB - A - 2 031 387**
**US - A - 3 738 517**
**US - A - 3 848 917**
**US - A - 4 273 485**

(73) Titulaire: **ROLFO S.p.A., 30, Corso IV Novembre,**
**I-12042 Bra (Cuneo) (IT)**

(72) Inventeur: **Rolfo, Giorgio, Corso IV Novembre 30,**
**I-12042 Bra (Cuneo) (IT)**

(74) Mandataire: **Saconney, Piero et al, c/o**
**JACOBACCI-CASETTA & PERANI S.n.c. Via Alfieri, 17,**
**I-10121 Torino (IT)**

ACTORUM AG

## Description

La présente invention se rapporte à un groupe connu, souforme au préambule de la revendication 1, comprenant un véhicule toutier de transport et un chevalet porte-plaques distinct du véhicule, dans lequel le véhicule est doté d'un canal de réception du chevalet lequel canal est délimité par des rebords latéraux et ouvert à l'extrémité postérieure du véhicule, pour le chargement et le déchargement du chevalet, et dans lequel le chevalet comprend essentiellement un châssis de base allongé, une série d'ordonnées transversales qui s'élèvent sur le châssis de base et qui présentent des côtés convergents vers le haut pour définir sur les deux flancs du chevalet des faces inclinées respectives d'appui des plaques, et une poutre de faîte qui relie les sommets des ordonnées.

Les groupes de ce genre ont l'inconvénient d'utiliser un véhicule étudié spécialement pour le transport des chevalets et inutilisable pour d'autres emplois. Entre autres, les chevalets utilisés pour le transport des plaques de verre et d'autres matières fragiles sur des camions et sur d'autres véhicules dotés d'un canal de réception ont l'inconvénient d'occuper, lorsqu'ils ne transportent pas des plaques, tout l'espace qu'ils occupent sur le véhicule pendant le transport des plaques. Lorsque le véhicule effectue un voyage de retour après avoir déposé sa charge, la présence du chevalet interdit en grande partie de charger sur le véhicule d'autres marchandises pour tirer profit du voyage de retour.

La présente invention a le but de remédier à ces inconvénients.

Suivant l'invention, ce but est atteint au moyen d'un groupe du type mentionné au début, caractérisé par le fait que, dans le véhicule, chaque rebord latéral du canal présente, dans sa partie supérieure, une zone longitudinale surbaissée, dirigée vers l'intérieur du canal, ces zones surbaissées servant d'appui pour les extrémités de planches transversales amovibles de couverture du canal, et par le fait que, dans le chevalet, les ordonnées sont articulées aussi bien au châssis de base qu'à la poutre de faîte suivant des axes transversaux respectifs, de manière à permettre le rabattement des ordonnées ellesmêmes entre une disposition dressée de service et une disposition rabattue sensiblement à l'horizontale sur le châssis de base, des moyens de retenue étant privus pour maintenir les ordonnées dans la position dressée, et le chevalet, avec les ordonnées dans la position rabattue, pouvant être reçus entièrement dans le canal du véhicule, sous les planches de couverture.

Grâce à cette solution, un véhicule doté d'un canal pour le chargement d'un chevalet porteplaques peut être transformé en un véhicule doté d'un plateau, constitué par les planches, pour le transport des marchandises diverses. Dans cette condition transformée, le véhicule peut transporter le chevalet replié et renfermé dans le canal couvert par les planches.

L'invention sera plus clairement comprise à la lecture de la description d'étaillée qui suit, faite en regard des dessins annexés, qui en illustrent à titre non limitatif une forme de mise ein œuvre préférée et dans lesquels:

la figure 1 est une vue en perspective d'une semiremorque,

la figure 2 est une vue en perspective d'un chevalet repliable pour le transport de plaques pouvant être associé à la semi-remorque de la figure 1,

la figure 3 est une coupe partielle effectuée dans le plan vertical longitudinal indiqué par la ligne III-III de la figure 1, qui illustre une suspension pneumatique associée à une roue,

la figure 4 est une demi-coupe effectuée dans le plan vertical transversal indiqué par la ligne IV-IV de la figure 3,

les figures 5 à 8 sont des vues en élévation schématiques du groupe qui illustrent la séquence de chargement du chevalet de la figure 2 sur la semi-remorque de la figure 1,

la figure 9 est une vue en coupe fragmentaire, à plus grande échelle et en partie coupée du détail enfermée dans le cercle IX de la figure 2,

la figure 10 est une vue en perspective fragmentaire à plus grande échelle du système d'articulation et de blocage d'une ordonné d'extrémité du chevalet,

les figures 11 et 12 sont des vues en élévation fragmentaires à plus grande échelle et partiellement coupées des zones renfermées dans les cercles respectifs XI et XII de la figure 2,

la figure 13 et une vue en élévation latérale du chevalet en cours de repliage, et

la figure 14 est une vue en élévation analogue du chevalet entièrement replié.

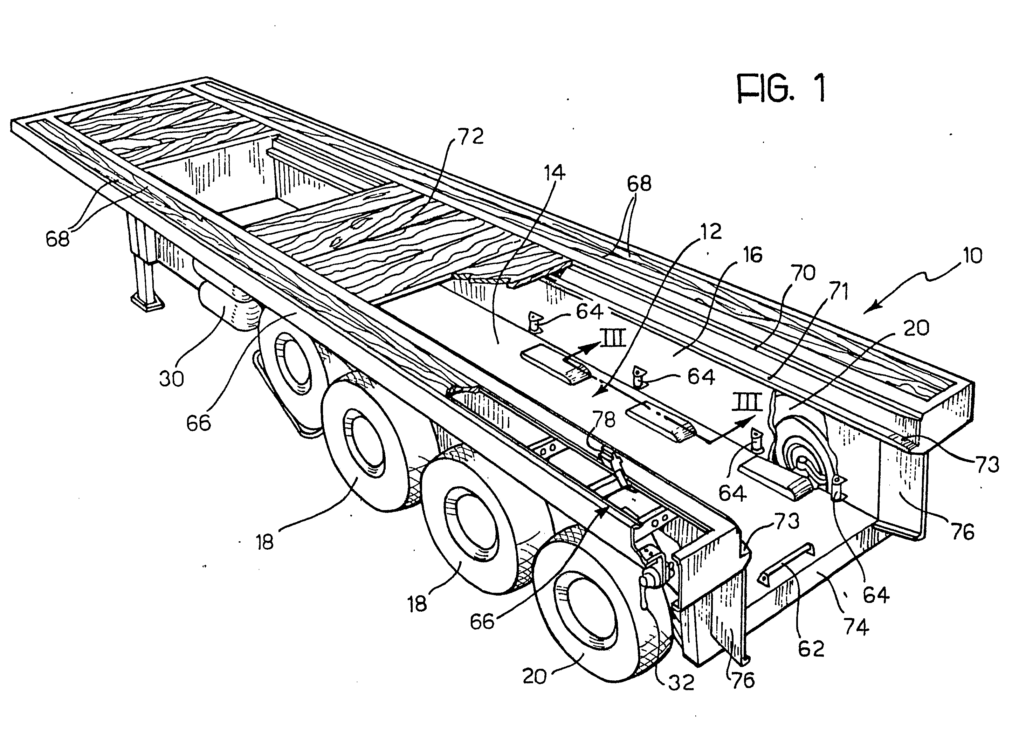

En se reportant à la figure 1, une semi-remorque indiquée dans son ensemble par 10, comprend un canal de charge 12 délimité par un plan de charge inférieur 14 et par des rebords latéraux 16.

La semi-remorque 10 est du type à trois axes, dont l'axe postérieur est autodirecteur. Les roues non directrices sont indiquées par 18 et les roues autodirectrices par 20. Les trois paires de roues 18, 18 et 20 sont reliées par des essieux rigides.

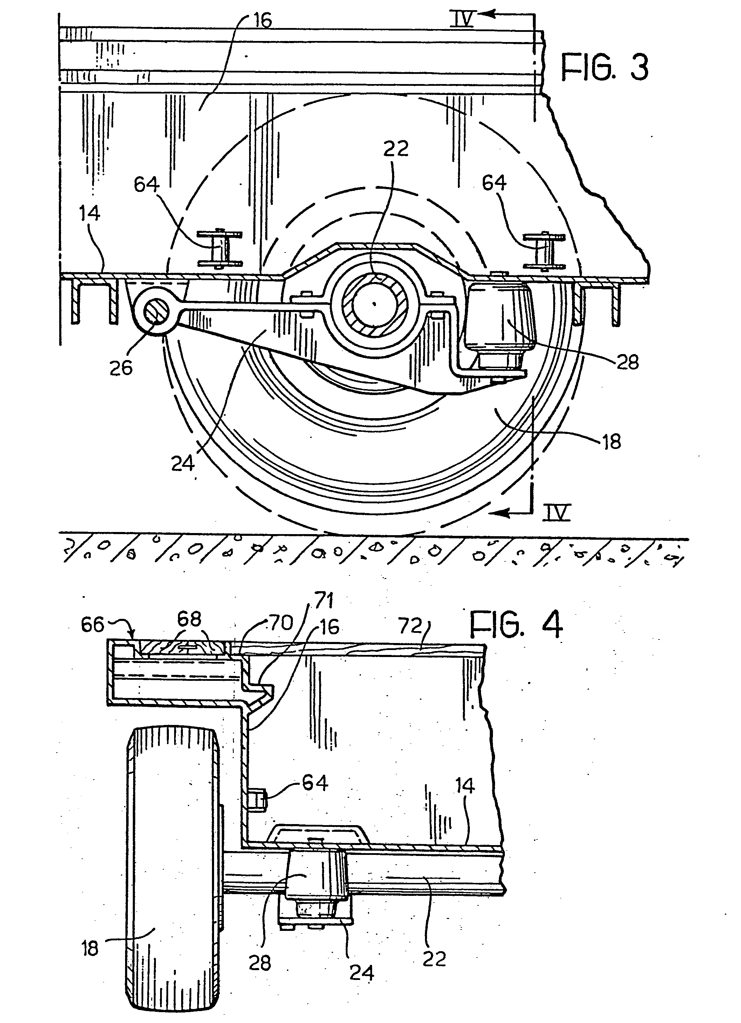

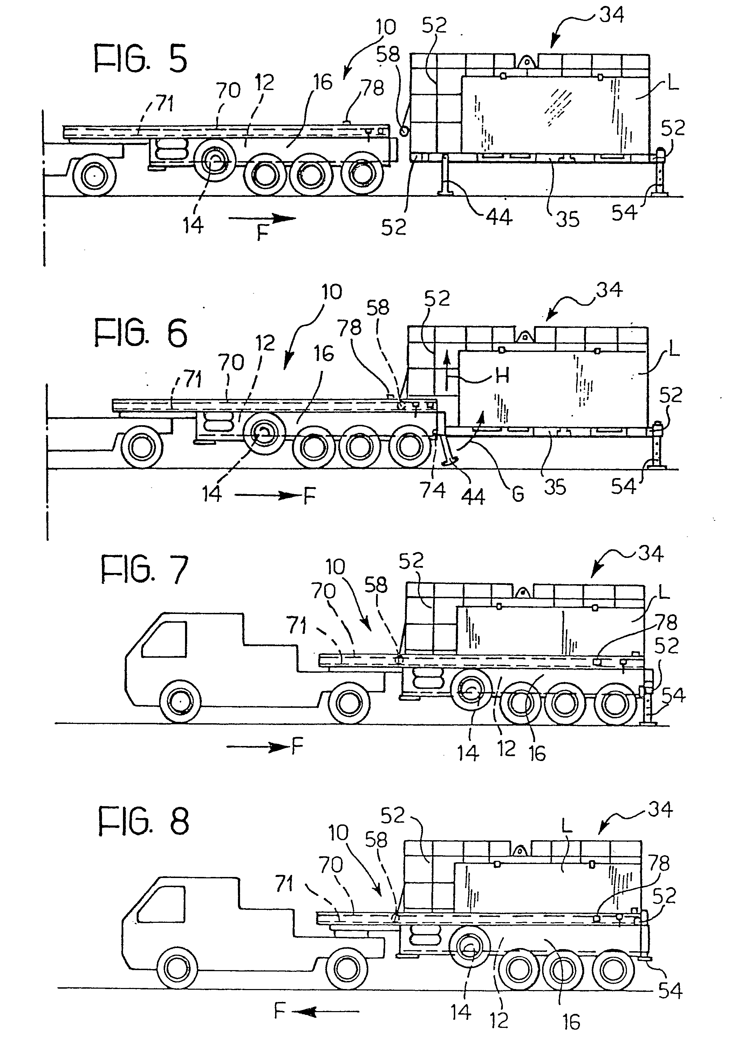

Sur les figures 3 et 4, on a illustré l'essieu et les suspensions de l'une des paires de roues non directrices 18, étant entendu que l'essieu et les suspensions des roues directrice 20 sont du même genre, à part le mécanisme de direction (non représenté).

En se reportant aux figures 3 et 4, les roues 18 sont montées rotatives aux extrémités respectives d'un essieu rigide 22 qui se trouve sous le plan de charge 14. Dans la région de chaque roue 18, l'essieu rigide 22 est fixé à un bras oscillant longitudinal 24. A son extrémité antérieure, par rapport au sens se la marche, chaque bras oscillant 24 est articulé, comme indiqué en 26, à un châssis de la semi-remorque qui supporte le plan de charge 14 et ses rebords 16. Entre l'autre extrémité du bras oscillant 24 et ce châssis est interposé un corps creux 28 d'une suspension pneumatique. Les corps 28 des suspensions de toutes les roues peuvent être alimentés à partir de réservoirs d'air comprimé 30 (figure 1) au moyen d'une soupape de commande 32. Grâce à la présence des suspensions réglables pneumatiques, le canal 12 et en particulier son plan de charge 14 peuvent être abaissés d'un niveau correspondant à la marche normale à un niveau prédéterminé dans lequel le plan de charge 14 se trouve peu au-dessus des axes des roues 18 et 20.

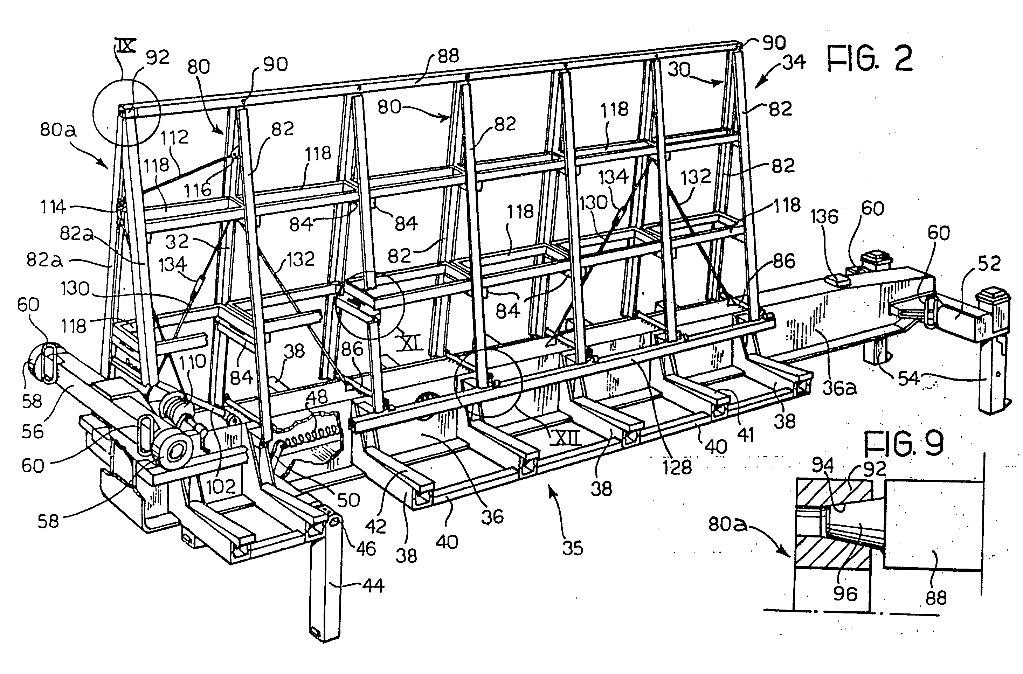

Dans le canal 12 peut être chargé un chevalet porte-plaques repliable qui, sur la figure 2 est désigné dans son ensemble par 34 et est représenté dans l'état déployé de service pour le transport de plaques. Le chevalet 34 est constitué essentiellement par des profilés métalliques reliés de la façon qui sera décrite plus loin. Dans l'état déployé de la figure 2, le chevalet 34 présente en coupe transversale une forme trapézoïdale propre à définir deux faces inclinées d'appui et de fixation pour des plaques L, par exemple des plaques de verre (figures 5 à 8).

Le chevalet comprend entre autres un châssis de base 35 dont les éléments principaux sont une robuste poutre médiane en caisson 36 et des traverses 38 qui font saillie de chaque côté de la poutre 36 et dont les extrémités saillantes sont reliées par des barres 40 qui constituent les bords latéraux longitudinaux du châssis de base 35.

Les parties saillantes des traverses 14 portent des barres inclinées 42 pour l'appui des bords inférieurs des plaques à transporter.

Le chevalet 34 représenté comprend, vers une extrémité antérieure par rapport au sens de la marche du véhicule, une paire de jambes d'appui rétractables 44 dont les extrémités supérieures sont calées sur un axe transversal rotatif 46 pour en permettre l'oscillation entre une position verticale de travail et, comme sur la figure 2, et une position rabattue en arrière à l'horizontale. Les jambes 44 sont rappelées à la position verticale de travail par un ressort commun 48 qui agit sur un bras de manivelle 50 calé sur l'axe 46.

L'extrémité postérieure 36 a de la poutre longitudinale 36 porte une traverse 52 avec une paire de jambes 54 rétractables téloscopiquement.

De même, à l'extrémité avant du chevalet 34, la poutre 36 porte une traverse 56 située plus en avant des jambes 44 et aux extrémités desquelles sont montées rotatives des roues latérales 58 à axe transversal dont la fonction sera expliquée plus loin.

Aux deux extrémités du chevalet 34 se trouvent des anneaux 60 pour le soulèvement de secours ou pour le chargement et le déchargement à partir de véhicules différents de celui représenté sur la figure 1.

En se reportant à nouveau à la figure 1, dans le voisinage immédiat de l'extrémité postérieure du plan de charge 14, se trouve un long rouleau 62 à axe tansversal destiné à être attaqué par la face inférieure de la poutre longitudinale 36 du chevalet 34.

Sur les deux rebords 16 du canal 12 se trouvent des rouleaux de guidage 64 à axe vertical destinés à être attaqués par les bords 42 du châssis de base du chevalet 34, pour maintenir ce dernier centré dans le canal 12.

Les deux rebords 16 sont munis de plates-bandes supérieures 66 qui surmontent les roues 18 et 20. Les plates-bandes 66 sont constituées par des structures en tôle dans lesquelles sont emboîtées des planches de bois 68.

Une zone de chaque plate-bande 66 adjacente au canal 14 présente deux zones surbaissées consécutives 70 et 71. Les zones surbaissées 70 servent d'appui pour les planches de bois transversales amovibles 72 qui, avec les planches longitudinales 68 sont destinées à constituer un large plan de charge pour marchandises diverses lorsque le canal 12 n'est pas utilisé pour transporter le chevalet 34 dans l'état déployé de la figure 2.

Le plan de charge peut être doté sur son périmètre, à la limite extérieure du véhicule, de rebords arrêts de charge rabattables (non représentés). Il est également prévu la couverture de la charge (chevalet 34 ou marchandises diverses) par une bache démontable et réglable en hauteur (non représentée).

Les zones encore surbaissées 71 constituent des pistes pour le roulement des roues 58 (figure 2) de la structure 34. La disposition est telle que les roues reposant sur les pistes 71 ne fassent pas saillie au-dessus du niveau des zones 70 d'appui des planches. Chaque piste 71 présente, à l'extrémité postérieure du canal 12, une partie 73 respective inclinée en guise de rampe pour faciliter l'engagement des roues 58 et provoquer un soulèvement initial de la partie antérieure de la structure 34.

Le plan de charge 14 du canal 12 est délimité à l'arrière par un bord constitué par une robuste traverse 74. A cette extrémité postérieure, les rebords 16 sont dotés de joues convergentes 76 pour favoriser le centrage de la structure 34 lorsqu'on insère cette dernière dans le canal 12 de la façon qui sera décrite maintenant en regard des figures 5 à 8.

Sur la figure 5, le chevalet repose au sol au moyen de ses jambes antérieures rabattables 44 et de ses jambes postérieures télescopiques 54. Pour charger le chevalet 34 dans le canal 12, la semi-remorque 10 recule. Les suspensions pneumatiques ont été déchargées de sorte que le plan de charge 14 se trouve au niveau minimum. A ce niveau, le rouleau 62 du plan 14 se trouve à un niveau inférieur à celui de la face inférieure du châssis de base 35 du chevalet 34. Dans cette condition, les pistes 70 des rebords 16 se trouvent à un niveau légèrement inférieur à celui des roues 58.

Avec la poursuite du recul de la semi-remorque 10, la partie postérieure du canal 12 vient encadrer la partie antérieure du chevalet 34 (figure 6). Dans ces conditions, les parties antérieures des longerons 36 surmontent le rouleau 62 et les roues 58 surmontent légèrement les pistes 71, ou bien se sont soulevées, avec toute la partie antérieure de chevalet 34, grâce à la montée des roues 58 le long des rampes 73.

Au moins l'un des rebords 16 est muni d'un bloc d'arrêt 78 qui constitue un obstacle vers l'extrémité postérieure de la piste 71 correspondante. Lorsque la semi-remorque 10 est reculée d'une quantité telle que le bloc 78 attaque la roue 58 correspondante, de sorte que le recul ne peut pas se poursuivre, un opérateur enlève le bloc 78 et, en même temps, manoeuvre la soupape de commande 32 en «gonflant» les suspensions pneumatiques et en soulevant d'une certaine quantité la partie antérieure du chevalet 34. A ce point, les jambes antérieures 44 sont soulevées du sol, tout en se trouvant encore dans la position verticale de travail, à laquelle elles sont rappelées par le ressort 48 (figure 2).

Le recul de la semi-remorque 10 peut alors se poursuivre. Comme indiqué sur la figure 6, le bord postérieur 74 du plan de charge 14 attaque les jambes 44 et les fait rabattre en arrière, contre la force de leur ressort de rappel 48, jusqu'à les amener à une position horizontale dans laquelle elles sont rentrées au-dessus du niveau de la face inférieure du châssis de base 35.

Le recul de la semi-remorque 10 se poursuit ensuite jusqu'à enfiler tout le chevalet 34 dans le canal 12, comme illustré sur la figure 7. Le chargement étant exécuté, la seule partie du chevalet 34 qui fait saillie au-delà de l'extrémité postérieure du canal 12 est la traverse 52, avec ses jambes télescopiques 54.

Pour compléter le chargement, on contracte les jambes télescopiques 54 après qu'a été effectué, au moyen de la soupape 52, un autre soulèvement de la partie postérieure du véhicule, comme illustré sur la figure 8.

Le chevalet 34 est ensuite bloqué dans le canal 12, à l'aide de moyens non représentés, on remet le bloc d'arrêt 78 en place et, finalement, on dégonfle les suspensions en agissant sur la soupape de commande 22 jusqu'à amener le plan de charge 14 et tout le canal 12 au niveau de marche normal du véhicule.

L'opération de déchargement se produit avec une séquence inverse de celle décrite précédemment. Il faut noter que, grâce à la présence du bloc d'arrêt 78, lorsque la semi remorque 10 s'est dégagée de la structure 34 d'une quantité telle que l'une des roues 58 vienne heurter le bloc 78, les jambes 44 qui font déjà saillie au-delà du bord 74 du plan de charge 14 ont déjà été ramenées à la position verticale de travail par le ressort de rappel 48 (figure 2).

A ce point, l'opérateur doit retirer le bloc 78 et, en même temps, manoeuvrer la soupape de commande 32 de manière à obtenir l'abaissement du plan de charge 14 au niveau minimum et appuyer le chevalet 34 sur ses quatre jambes. Ce n'est que dans ces conditions que l'avancement de la semi-remorque 10 peut se poursuivre jusqu'à l'abandon définitif du chevalet 34.

Grâce à la disposition décrite plus haut, puisque le plan de charge 14 ne descend pas au-dessous des axes des roues postérieures 18, 20, il est possible de doter ces roues d'essieux rigides et, en particulier, dans le cas d'une semi-remorque de grande longueur, de doter les roues postérieures 20 d'un système autodirecteur à essieux rigides.

Ceci constitue un avantage puisque l'abissement du fond du canal au niveau du sol exigerait l'utilisation de suspension à roues indépendantes, étant donné que le fond du canal devrait nécessairement s'abaisser au-dessous des axes des roues. Les suspensions à roues indépendantes ont l'inconvénient de conférer à la semi-remorque une instabilité de marche indésirable. En outre, dans les semi-remorques de grandes longueurs affectées en général au transport considéré, il est nécessaire d'adopter des roues postérieures autodirectrices. Les systèmes autodirecteurs à roues indépendantes sont coûteux par le fait que leur diffusion est limitée à quelques applications spécifiques, comme celle considérée.

De même, dans la disposition décrite plus haut suivant l'invention, étand donné que l'abaissement du fond 14 du canal 12 n'est pas excessif et, dans le cas d'une semi-remorque, en abaissant seulement sa partie postérieure, on évite la nécessité d'employer un tracteur muni de suspensions pneumatiques qui permettent également l'abaissement du tracteur. Les tracteurs à suspensions pneumatiques ne sont pas des modèles de production normale et sont donc coûteux. En outre, leurs suspensions pneumatiques sont difficiles à retrouver sur le marché lorsqu'il est nécessaire de les remplacer.

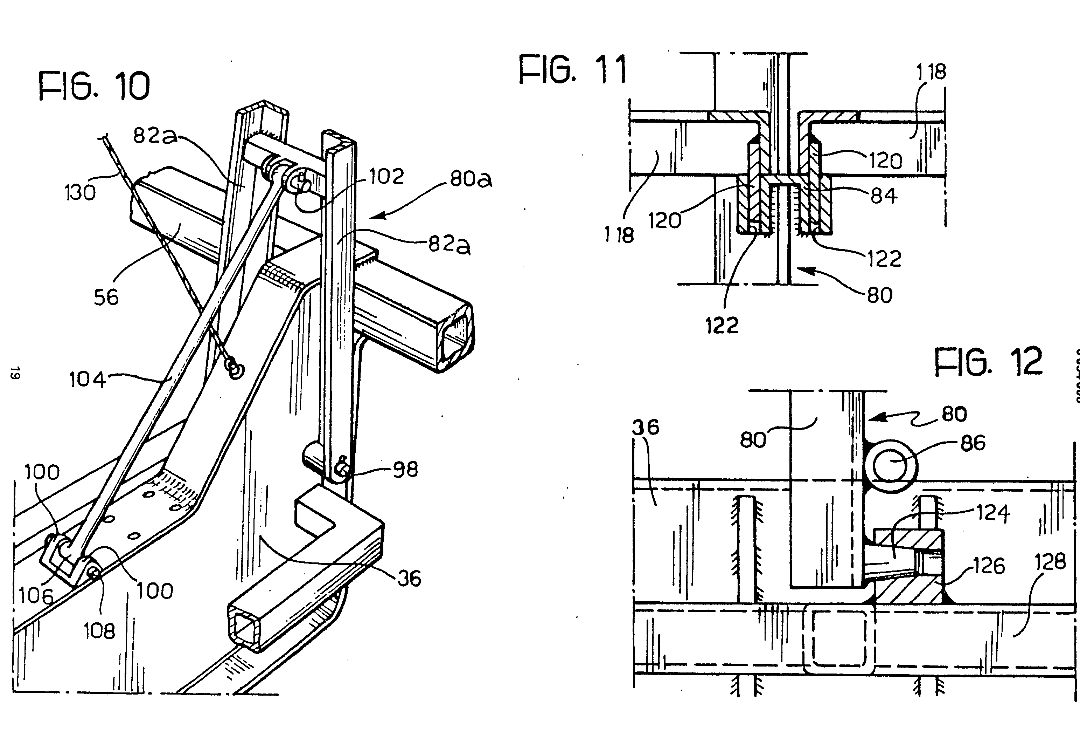

On poursuivra maintenant la description du chevalet 34 en faisant référence à la figure 3 et aux figures 9 et suivantes.

Sur le châssis de base du chevalet 34 s'élève une série d'ordonnées toutes désignées par 80, sauf la première ordonné de la série (à gauche sur la figure 2), qui est désignée par 80a.

Chaque ordonnée 80, 80a comprend une paire de montants indiqués respectivement en 82 et 82a. Ces montants convergent vers le haut suivant une configuration en triangle isocèle, de façon à définier, sur les deux côtés du chevalet 34, des faces d'appui respectives pour les plaques, d'une façon connue.

Dans chaque ordonnée 80, 80a, les deux montants 82 et 82a sont reliés, à intervalles, par des traverses de raidissement 84.

Chacune des ordonnées 84 est articulée en bas sur la poutre 36 suivant un axe transversal matérialisé par une cheville 86.

Sur les sommets ou cimes des ordonnées 80, s'étend une poutre de faîte 88 à laquelle les ordonnées 90 sont de même articulées suivant des axes transversaux matérialisés par des chevilles 90.

Le sommet ou la cime de l'ordonnée 80a est muni d'une doulle 92. Comme illustré sur la figure 9, la douille 92 présente un trou conique 94 dans lequel est engagée une broche conique 96 de l'extrémité correspondante de la poutre de faîte 88.

En se reportant à la figure 10, l'ordonnée d'extrémité supplémentaire 80a est articulée en bas à l'extrémité correspondante de la poutre 36, de façon analogue aux ordonnées 80, à l'aide d'une cheville transversale 98.

Sur la poutre 36, entre la première ordonnée 80a et l'ordonnée 80 suivante, est fixée une paire d'oreilles 100 dont les trous sont alignés dans la direction transversale du chevalet.

A l'ordonnée 80a est articulée en 102 une flèche 104 dont l'extrémité inférieure présente un œil transversal 106. Lorsque l'ordonnée 80a est dressée, comme sur la figure 1, l'œil 106 se trouve entre les oreilles 100. Dans les oreilles 100 et dans l'oeil 106 est enfilée une broche amovible 100 grâce à laquelle la flèche 104 pourvoit à bloquer l'ordonnée 80a dans l'état dressé.

En se reportant à nouveau à la figure 2, derrière la traverse 56 et sur la poutre 36 est monté un treuil 110. Ce dernier a été représenté à commande manuelle mais il pourrait également être avantageusement à commande électrique, hydraulique, pneumatique, etc.

Une corde métallique 112 enroulée sur le tambour du treuil 110 est renvoyée sur une poulie 114 portée par les montants 82a de l'ordonnée 80a vers leur sommet et est ancrée à l'ordonnée 80 adjacente à un point 116 situé à un niveau également proche du sommet de cette ordonnée.

Avec la première ordonnée 80a bloquée en position dressée et avec le tambour du treuil 110 boqué par un système approprié, par exemple du type à galet, la corde 112 en tension, dans la disposition de la figure 2, maintient dressées toutes les autres ordonnées 80 et maintient la broche 96 de la poutre de faîte 88 engagée dans la douille 92.

Pour raidir le chevalet 34 dans la dispositif on dressée de service de la figure 2, les montants 80, 80a des ordonnées consécutives sont reliés par des petits châssis horizontaux amovibles 118.

Comme illustré sur la figure 11, chacun de ces petits châssis 118 est muni, à chacune de ses extrémités d'une languette correspondante 120. Les languettes 120 sont engagées de haut en bas dans des poches correspondantes 122 portées par les traverses 84 des ordonnées 80 et 80a.

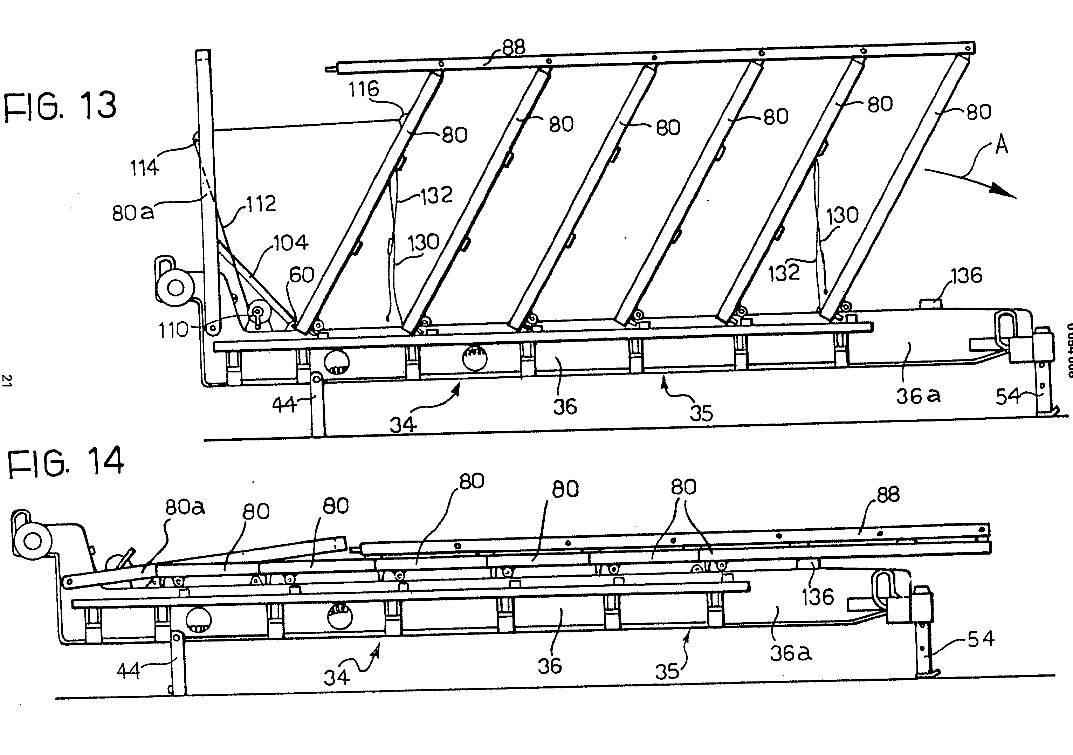

Toujours dans le but de stabilisation du chevalet 34 dans l'état dressé de la figure 2, chaque montant 82 des ordonnées 80 est muni (figure 12), au-dessous de son axe d'articulation sur la poutre 36, d'une broche conique respective 124, engagée horizontalement dans une douille conique correspondante 126 fixée à une longrine 128 qui fait partie du châssis de base et court le long du flanc de la poutre centrale 36. L'engangement des broches 124 dans les douilles 126 prévient en particulier les éventuels mouvements latéraux des montants 80 dus à des glissements de leurs axes 86.

La stabilisation ultérieure du chevalet 34 dans l'état dressé de la figure 2 est obtenue au moyen de tirants de contreventement 130, 132 constitués par des cordes métalliques ou analogues.

Les tirants 130 sont ancrés de façon détachable à la poutre 36 ainsi que, en haut, aux ordonnées respectives 80 (la deuxième et l'avant-dernière en partant de la gauche sur la figure 2). Les même tirants 130 sont munis de tendeurs à vis 134.

On peut faire passer le chevalet 34 de la disposition dressée de service de la figure 2 à une disposition abattue ou repliée, pour son entassement dans le canal 12 du véhicule 10 de la figure 1.

Pour effectuer cette opération, on enlève les petits châssis 118 en dégageant leurs languettes 120 des poches 122 puis on libère les tirants 130 (ceux de gauche sur la figure 2). En libérant le tambour du treuil 110, qui est doté d'un rouage de réduction approprié, on déroule la corde 112 du tambour et les ordonnées 80 s'abattent ou basculent vers la droite, comme indiqué par la flèche A sur la figure 13. Au début de ce mouvement, les broches 96 et 120 se dégagent des douilles respectives 92 et 126.

A la fin du déroulement de la corde 113, on atteint, en ce qui concerne les ordonnées 80, la disposition de la figure 14, cependant que la première ordonnée 80a est encore dressée, comme sur la figure 13.

Comme on peut l'observer, les mouvements des ordonnées 80 et de la poutre de faîte 88 se produisent comme les mouvements de trois côtés consécutifs d'un parallèlogramme articulé dont le quatrième côté est constitué par la poutre transversale 36 du châssis de base.

Finalement, on extrait la broche 108, en débloquant ainsi l'ordonnée 80a et on rabat ou on bascule à la main cette dernière, en atteignant finalement la disposition de la figure 14.

Comme on peut l'observer sur la figure 14, les ordonnées 80 et 80a occupent une disposition «aplatie» sensiblement à l'horizontale sur la poutre 36 du châssis de base 35. Dans cette position, les ordonnées sont encastrées les unes dans les autres, l'ordonnée 30 située à l'extrémité postérieure du chevalet 34 (à droite sur les figures 13 et 14), dans l'état de la figure 14, repose sur la partie terminale ou «queue» 36a de la poutre 36, avec interposition d'un bloc ou coussin 136 (également visible sur la figure 2).

Pour dresser à nouveau le chevalet, on exécute une séquence d'opérations inverse de celle décrite précédemment.

Le chargement du chevalet 34, dans l'état replié, dans le canal 12 du véhicule 10, se produit avec exactement la même séquence représentée sur les figures 5 à 8 et le déchargement du chevalet 34 du véhicule 10 se produit avec la séquence inverse.

Le chevalet 34 peut également être replié et déployé pendant qu'il se trouve sur le véhicule 10 dans l'état de la figure 8.

Lorsque le chevalet 34 replié se trouve sur le véhicule 10, aucune de ses parties ne fait saillie au-dessus du niveau des zones surbaissées 70. Dans ces conditions, tout le canal 12 peut être recouvert des planches 72 appuyées sur les zones surbaissées 70.

## Revendications

1. Groupe comprenant un véhicule routier (10) de transport et un chevalet (34) porte-plaques distinct du véhicule (10), dans leque le véhicule (10) est doté d'un canal (12) de réception du chevalet (34), lequel canal (12) est délimité par des rebords latéraux (16) et ouvert à l'extrémité postérieure du véhicule (10) pour le chargement et le déchargement du chevalet (34), et dans lequel le chevalet (34) comprend essentiellement un châssis de base (35) allongé, une série d'ordonnées transversales (80, 80a), qui s'élèvent sur le châssis de base (35) et qui présentent des côtés (82; 82a) convergents vers le haut pour définir sur les deux flancs du chevalet (34) des faces inclinées respectives d'appui des plaques (L), et une poutre de faîte (88) qui relie les sommets des ordonnées (80, 80a), caractérisé par le fait que, dans le véhicule (10), chaque rebord latéral (16) du canal (12) présente, dans sa partie supérieure, une zone longitudinale surbaissée (70) dirigée vers l'intérieur du canal (12), ces zones surbaissées (70) servant d'appuis pour les extrémités de planches transversales (72) amovibles de couverture du canal (12) et par le fait que, dans le chevalet (34), les ordonnées (80, 80a), sont articulées aussi bien sur le châssis de base (35) que sur la poutre de faîte (88) suivant des axes transversaux (86, 90) respectifs, de manière à permettre le rabattement des ordonnées (80, 80a) entre une disposition dressée de service et une disposition abattue sensiblement à l'horizontale sur le châssis de base (35), des moyens de retenue étant prévus pour maintenir les ordonnées (80, 80a) dans la position dressée, et le chevalet (34) avec les ordonnées (80, 80a) dans la position rabattue, pouvant être reçus entièrement dans le canal de réception du véhicule (10), sous les planches de couverture (72).

2. Groupe suivant la revendication 1, caractérisé par le fait que, dans le chevalet (34), les moyens de retenue comprennent, à une extrémité du chevalet, une ordonnée supplémentaire (80a) articulée en bas, suivant un axe transversal (98) sur le châssis de base (35), cette ordonnée supplémentaire pouvant être fixée dans la position dresée indépendamment des autres ordonnées (80) et au sommet le laquelle peut s'accoupler une extrémité correspondante de la poutre de faîte (88).

3. Groupe suivant la revendication 2, caractérisé par le fait que le sommet de l'ordonnée supplémentaire (80a) du chevalet (34) porte une douille conique (92) et l'extrémité correspondante de la poutre de faîte (88) présente une broche conique (96) qui, à la réalisation de la position dressée du chevalet (34), peut être engagée horizontalement dans la douille (92).

4. Groupe suivant la revendication 2 ou 3, caractérisé en ce qu'à l'ordonnée supplémentaire (80a) du chevalet (34) est reliée, en un point intermédiaire (102) de sa hauteur, une extrémité supérieure d'une flèche (104) dont l'extrémité inférieure est reliée au châssis de base (35) lorsque cette ordonnée se trouve dans la position dressée, l'une de ces liaisons étant réalisée au moyen d'une broche amovible (108) et l'autre étant une liaison articulée (102).

5. Groupe suivant l'une quelconque des revendications 2 à 4, caractérisé par le fait que le châssis de base (35) du chevalet (34) porte dans la région de l'ordonnée supplémentaire (80a), un treuil à corde (110) de manœuvre des ordonnées (80) articulées à la poutre de faîte (88), la corde (112) du treuil étant renvoyée par une poulie (114) supportée vers le sommet de l'ordonnée supplémentaire (80a) et est ancrée à l'ordonnée (80) adjacente en un point (116) situé à un niveau également proche du sommet de cette ordonné (80).

6. Groupe suivant l'une quelconque des revendications précédentes, caractérisé par le fait que, dans le chevalet (34) les ordonnées (80) articulées à la poutre de faîte (88) sont munies, au-dessous de leurs axes (86) d'articulation au châssis de base (35), de broches coniques respectives (124) qui, à la réalisation de la position dressée, du chevalet peuvent être engagées horizontalement dans des douilles coniques correspondantes (126) portées par le châssis de base (35).

7. Groupe suivant une quelconque des revendications précédentes, caractérisé par le fait que les ordonnées (80, 80a) consécutives du chevalet (34), dans leur position dressées, sont reliées par des petits châssis horizontaux amovibles (118) de raidissement, lesquels à leurs extrémités, présentent des languettes (120) pouvant être engagées de haut en bas dans des poches correspondantes (122) portées par les ordonnées (80, 80a).

8. Groupe suivant une quelconque des revendications précédentes, caractérisé en ce qu'au moins quelques ordonnées (80) sont contreventées, dans la disposition dressée du chevalet, par des tirants (130, 132) (câbles métalliques ou analogues) ancrés de façon détachable au châssis de base (35) et/ou aux ordonnées elles-mêmes.

9. Groupe suivant la revendication 1, caractérisé par le fait que, dans le véhicule (10), le canal de réception (12) peut être abaissé, au moins à son extrémité postérieure, d'une quantité propre à amener le plan de charge (14) à un niveau prédéterminé non inférieur à celui des axes des roues, par le fait que le chevalet (34) est doté de jambes d'appui rétractables (44, 54) qui en maintiennent une face inférieure à un niveau supérieur au susdit niveau prédéterminé et par le fait qu'une partie antérieure (56) du chevalet (34), destinée à s'engager la première dans le canal (12) fait saillie par rapport aux jambes rétractables antérieures (44) les plus proches de cette partie antérieure et porte des moyens de roulement (58) aptes à attaquer des moyens de roulement correspondants (71) associés du véhicule (10) à l'extrémité ouverte du canal (12) lorsque le plan de charge (14) est abaissé au susdit niveau prédéterminé.

10. Groupe suivant la revendication 1 ou 9, caractérisé en ce que les rebords (16) du canal (12) présentent des zones surbaissées (71) qui constituent des pistes de roulement et la partie antérieure du chevalet (34) est munie de roues (58) aptes à rouler sur ces pistes (71).

11. Groupe suivant la revendication 10, caractérisé par le fait que les pistes de roulement (71) présentent, à l'extrémité postérieure du canal (12), des rampes ascendantes respectives (73) pouvant être attaquées par les roues (58) pour soulever la partie antérieure du chevalet (34) et ses jambes rétractables antérieures (44) sous l'effet du recul du véhicule (10).

12. Groupe suivant la revendication 9, caractérisé en ce que les susdites jambes rétractables antérieures (44) sont articulées au chevalet (34) de manière à pouvoir passer d'une position verticale de travail à une position rentrée par rapport à la susdite face inférieure du chevalet (34), dans laquelle position rentrée les jambes (44) sont dirigées vers l'arrière par rapport à la partie d'extrémité antérieure de la structure et, par le fait qu'un bord postérieur (74) du canal (12) est apte à attaquer en poussée les jambes antérieures (44), à la suite d'un recul du véhicule (10) et à en provoquer la rotation à la position rentrée lorsque le canal (12) et la partie antérieure (56) de la structure porte-charge (35) intoduite dans le canal ont été élevés partiellement au moyen des suspensions réglables du véhicule.

13. Groupe suivant la revendication 12, caractérisé par le fait que les jambes antérieures articulées (44) sont rappelées à la position verticale par des moyens élastiques (48).

**Patentansprüche**

1. Garnitur, die aus einem Transport-Strassenfahrzeug (10) und einem von dem Fahrzeug (10) getrennten Plattenträger-Gestell (34) besteht, bei welchem das Fahrzeug (10) mit einer Rinne (12) zur Aufnahme des Gestells (34) ausgestattet ist, welche Rinne (12) durch seitliche Randleisten begrenzt und am rückwärtigen Ende des Fahrzeuges (10) zur Beladung und Entladung des Gestells (34) offen ist, und bei welchem das Gestell (34) im wesentlichen einen langgestreckten Basisrahmen (35), eine Reihe von Schräg verlaufenden Einrichtungen (80, 80a), welche sich über dem Basisrahmen (35) erheben und welche nach oben konvergierende Seitenteile (82, 82a) aufweisen, um auf den beiden Seitenwänden des Gestells (34) die jeweiligen geneigten Flächen der Unterlage der Platten (L) zu begrenzen, und einen Dachträger (88), welcher die oberen Enden der Einrichtungen (80, 80a) verbindet, aufweist, dadurch gekennzeichnet, dass in dem Fahrzeug (10) jede seitliche Randleiste (16) der Rinne (12) in ihrem oberen Teil eine langgestreckte flachgewölbte Zone (70), die gegen das Innere der Rinne (12) gerichtet ist, aufweist, wobei diese flachgewölbten Zonen (70) als Unterlage für die Enden der ausfahrenden Querplanken (72) der Abdeckung der Rinne (12) dienen, und dass in dem Gestell (34) die Einrichtungen (80, 80a) sowohl auf dem Basisrahmen (35) als auch auf dem Dachträger (88), den jeweiligen Querachsen (86, 90) folgend, derart gelenkig angebracht sind, dass sie das Umlegen der Einrich-tungen (80, 80a) zwischen einer aufgerichteten Be-dienungsstellung und einer nahezu bis zur Horizontale gestürzten Stellung auf dem Basisrahmen (35) gestatten, wobei Halteeinrichtungen zur Halterung der Einrichtungen (80, 80a) in der aufgerichteten Stellung und des Gestelles (34) mit den Einrichtungen (80, 80a) in der umgeklappten Stellung vorgesehen sind und diese zur Gänze in der Aufnahmerinne (12) des Fahrzeuges (10) unter den Deckplanken (72) aufgenommen werden können.

2. Garnitur nach Anspruch 1, dadurch gekennzeichnet, dass in dem Gestell (34) die Halteeinrichtungen an dem einen Ende des Gestells eine mittels eines Querbolzens (98) unten auf dem Basis-rahmen gelenkig angebrachte zusätzliche Einrich-tung (80a) aufweisen, welche in der aufgerichteten Stellung unabhängig von den anderen Einrichtungen (80) befestigt werden kann und an deren Spitze sich ein entsprechendes Ende des Dachträgers (88) ankuppeln kann.

3. Garnitur nach Anspruch 2, dadurch gekennzeichnet, dass die Spitze der zusätzlichen Einrichtung (80a) des Gestells (34) eine konische Buchse (92) trägt und das entsprechende Ende des Dachträgers (88) einen konischen Dorn (96) aufweist, welcher bei der Verwircklichung der aufgerichteten Stellung des Gestells (34) in die Buchse (92) horizontal eingreifen kann.

4. Garnitur nach Anspruch 2 oder 3, dadurch gekennzeichnet, dass mit der zusätzlichen Einrichtung (80a) des Gestells (34) an einer Zwischenstelle (102) seiner Höhe ein oberes Ende eines Auslegers (104) verbunden ist, dessen unteres Ende mit dem Basisrahmen (35) verbunden ist, wenn sich diese Einrichtung in der aufgerichteten Stellung befindet, wobei eine dieser Verbindungen mittels eines herausziehbaren Dorns (108) realisiert wird und die andere eine angelenkte Verbindung (102) darstellt.

5. Garnitur nach einem der Ansprüche 2 bis 4, dadurch gekennzeichnet, dass der Basisrahmen (35) des Gestells (34) in dem Bereich der zusätzlichen Einrichtung (80a) eine Seilwinde (110) zur Betätigung der an dem Dachträger (88) gelenkig angebrachten Einrichtungen (80) trägt, dass das Seil (112) der Winde durch eine Seilrolle (114) zurückgeleitet wird, welche in Richtung auf die Spitze der zusätzlichen Einrichtung (80a) unterstützt wird und an der angrenzenden Einrichtung (80) an einem Punkt (116) verankert ist, der ebenfalls in der Nähe der Spitze dieser Einrichtung (80) gelegen ist.

6. Garnitur nach einem der Ansprüche 1 bis 5, dadurch gekennzeichnet, dass in dem Gestell (34) die an dem Dachträger (88) gelenkig angebrachten Einrichtungen (80) unterhalb ihrer Drehachsen (86) am Basisrahmen (35) mit jeweiligen konischen Dornen (124) versehen sind, welche bei der Realisierung der aufrechten Stellung des Gestells in entsprechende konische Buchsen (126), die der Basisrahmen (35) aufweist, eingreifen können.

7. Garnitur nach einem der Ansprüche 1 bis 6, dadurch gekennzeichnet, dass die aufeinanderfolgenden Einrichtungen (80, 80a) des Gestells (34) in ihrer aufgerichteten Stellung durch kleine hori-zontale bewegliche Versteifungsrahmen (118) ver-

bunden sind, welche an ihren Enden Zäckchen (120) aufweisen, die von oben nach unten in die entsprechenden Taschen (122), welche die Einrichtungen (80, 80a) aufweisen, eingreifen können.

8. Garnitur nach einem der Ansprüche 1 bis 7, dadurch gekennzeichnet, dass zumindest einige der Einrichtungen (80) in der aufgerichteten Stellung des Gestells durch Verstärkungsrippen (Metall- oder anaolge Seile (130, 132) windversteift sind, die am Basisrahmen (35) und/oder an den Einrichtungen selbst lösbar verankert sind.

9. Garnitur nach Anspruch 1, dadurch gekennzeichnet, dass in dem Fahrzeug (10) die Aufnahmerinne (12) zumindest an ihrem rückwärtigen Ende um ein Ausmass absinken kann, das geeignet ist, die Beladungsebene (14) auf ein vorbestimmtes Niveau zu bringen, das nicht unter jenem der Radachsen liegt; dass das Gestell (34) mit einziehbaren Stützbeinen (44, 54) ausgestattet ist, welche von diesem eine Unterseite bei einem Niveau, das über dem obgenannten vorbestimmten Niveau liegt, halten; und dass ein vorderer Teil (56) des Gestells (34), der dazu bestimmt ist, als erster in die Rinne (12) einzugreifen, die in bezug auf die einziehbare Vorderbeine (44) nächst liegenden Teile dieses Vorderteiles hervorspringen macht und Rolleinrichtungen (58) trägt, die imstande sind, entsprechende dem Fahrzeug (10) zugeordnete Rolleinrichtungen (71) anzulaufen, die mit dem offenen Ende der Rinne (12) verbunden sind, wenn die Beladungsebene (14) auf das obgenannte vorbestimmte Niveau gesenkt wird.

10. Garnitur nach Anspruch 1 oder 9, dadurch gekennzeichnet, dass die Randleisten (16) der Rinne (12) flachgewölbte Zonen (71) aufweisen, welche Rollbahnen darstellen, und dass der Vorderteil des Gestells (34) mit Rädern (58) ausgestattet ist, die imstande sind, auf diesen Bahnen (71) zu rollen.

11. Garnitur nach Anspruch 10, dadurch gekennzeichnet, dass die Rollbahnen (70) an dem rückwärtigen Ende der Rinne (12) jeweilige ansteigende Rampen (73) aufweisen, die durch die Räder (58) angelaufen werden können, um den Vorderteil des Gestells (34) und seine einziehbaren vorderen Beine (44) unter der Einwirkung des Rückstosses des Gestells (10) in die Höhe zu heben.

12. Garnitur nach Anspruch 9, dadurch gekennzeichnet, dass die obgenannten einziehbaren Vorderbeine (44) mit dem Gestell (34) derart gelenkig verbunden sind, dass sie aus einer vertikalen Arbeitsstellung in eine in bezug auf die obgenannte Unterseite des Gestells (34) zurückgekehrte Stellung übergehen können, in welcher zurückgekehrten Stellung die Beine (44) gegen den in bezug auf den Teil des vorderen Endes des Aufbaus rückwärtigen Teil geleitet werden, und dass ein rückwärtiger Rand (74) der Rinne (12) imstande ist, infolge eines Rückstosses des Fahrzeuges (10) stossend die Vorderbeine (44) anzulaufen und dadurch die Drehung in die rückgekehrte Stellung zu bewirken, da die Rinne (12) und der in die Rinne eingeführte Vorderteil (56) des Lastträgers-Aufbaus (35) mittels der regulierbaren Aufhängungen des Fahrzeuges teilweise gehoben wurden.

13. Garnitur nach Anspruch 12, dadurch gekennzeichnet, dass die angelenkten Vorderbeine (44) mittels elastischen Einrichtungen (48) in die vertikale Stellung zurückgeholt werden.

**Claims**

1. Unit comprising a road transport vehicle (10) and a plate-carrier frame (34) separate from the vehicle (10), in which the vehicle (10) is provided with a channel (12) for receiving the frame (34), which channel (12) is bounded by lateral rims (16) and open at the rear end of the vehicle (10) for loading and unloading the frame (34), and in which the frame (34) comprises essentially an elongated base chassis (35), a series of transverse ordinates (80, 80a), which are upright on the base chassis (35) and which have sides (82, 82a) converging upwards to define on the two flanks of the frame (34) respective inclined faces for resting the plates (L), and a ridge beam (88) which connects the tops of the ordinates (80, 80a), characterised in that, in the vehicle (10), each side rim (16) of the channel (12) has, in sits upper part, a longitudinal underslung zone (70) directed towards the inside of the channel (12), these underslung zones (70) serving as rests for the ends of the removabel transverse boards (72) for covering the channel (12) and in that, in the frame (34), the ordinates (80, 80a) are articulated both on the base chassis (35) and on the ridge beam (88) following the respective transverse axes (86, 90) so as to permit tilting of the ordinates (80, 80a) between a raised surface disposition and a disposition lowered substantially to the horizontal on the base chassis (35), retaining means being provided to hold the ordinates (80, 80a) in the upright position and the frame (34) with the ordinates (80, 80a) in the lowered position, the means being capable of being wholly received in the receiving channel (12) of the vehicle (10), under the covering boards (72).

2. Unit according to Claim 1, characterised in that, in the frame (34), the retaining means comprise, at one end of the frame, an additional ordinate (80a) articulated at the bottom, along a transverse axis (98) on the base chassis (35), this additional frame being capable of being fixed in the upright position independently of the other ordinates (80) and at the top of which can be coupled a corresponding end of the ridge beam (88).

3. Unit according to Claim 2, characterised in that the top of the additional ordinate (80a) of the frame (34) carries a conical socket (92) and the corrisponding end of the ridge beam (88) has a conical spigot (96) which, when the upright position of the frame (34) is formed, can be engaged horizontally in the socket (92).

4. Unit according to Claim 2 or 3, characterised in that to the additional ordinate (80) of the frame (34) there is connected, at an intermediate point (102) of its height, an upper end of a beam (104) the lower end of which is connected to the base chassis (35) when this ordinate is in the upright position, one of these connections being made by means of a removable pin (108) and the other being an articulated connection (102).

5. Unit according to any one of Claims 2 to 4, characterised in that the base chassis (35) of the frame (34) carries, in the region of the additional ordinate (80a), a rope winch (110) for monoeuvring the ordinates (80) articulated to the ridge beam (88), the rope (112) of the winch being returned by a pulley carried near the top of the additional ordinate (80a) and is anchored to the adjacent ordinate (80) at a point (116) situated at a level which is also close to the top of this ordinate (80).

6. Unit according to any one of the preceding claims, characterised in that, in the frame (34) the ordinates (80) articulated to the ridge beam (88) are equipped, below their axes (86) with articulation to the base chassis (35), with corresponding conical spigots (124) which, when the upright position of the frame is formed, can be engaged horizontally in the corresponding conical sockets (126) carried by the base chassis (35).

7. Unit according to any one of the preceding claims, characterised in that the consecutive ordinates (80, 80a) of the frame (34), in their upright position, are connected by small removable horizontal chassis (118) for stiffening, which chassis at their ends have tongues (120) capable of engaging downwards into corresponding pockets (122) carried by the ordinates (80, 80a).

8. Unit according to any one of the preceding claims, characterised in that at least some ordinates (80) are cross-braced in the upright position of the frame, by braces (130, 132) (metal cables or similar) anchored in a removable manner to the base chassis (35) and/or to the ordinates themselves.

9. Unit according to Claim 1, characterised in that, in the vehicle (10) the receiving channel (12) can be lowered, at least at its rear end, by an amount appropriate for setting the loading level (14) at a predetermined height which is not lower than that of the wheel axes, due to the fact that the frame (34) is provided with retractable support legs (44, 54) which keep a lower face of it at a height which is higher than the abovementioned predetermined height and due to the fact that a forward part (56) of the frame (34), intended to engage first in the channel (12) projects relative to the forward retractable legs (44) which are the nearest to this forward part and carries rolling means (58) capable of engaging corresponding rolling means (71) associated with the vehicule (10) at the open end of the channel (12) when the loading level (14) is lowered to the said predetermined height.

10. Unit according to Claim 1 or 9, characerised in that the rims (16) of the channel (12) have underslung zones (71) which form rolling tracks and the forward part of the frame (34) is equipped with wheels (58) capable of rolling on these tracks (71).

11. Unit according to Claim 10, characterised in that the rolling tracks (71) have, at the rear end of the channel (12), corresponding ascending ramps (73) capable of being engaged by the wheels (58) to raise the forward part of the frame (34) and its forward retractable legs (44) under the action of reversing the vehicle (10).

12. Unit according to Claim 9, characterised in that the abovementioned forward retractable legs (44) are articulated to the frame (34) so as to be capable of changing from a vertical working position to a retracted position relative to the abovementioned lower face of the frame (34), in which retracted position the legs (44) are directed backwards relative to the forward end part of the structure and, in that a rear edge (74) of the channel (12) is capable of engaging the forward legs (44) by pushing, following reversing of the vehicle (10) and causing them to rotate into the retracted position when the channel (12) and the forward part (56) of the load-carrier structure (35) entered into the channel have been partially raised by means of the adjustable suspensions of the vehicle.

13. Unit according to Claim 12, characterised in that the forward articulated legs (44) are returned to the vertical position by resilient means (48).

FIG. 1

0054008

FIG. 2

FIG. 9

FIG. 3

FIG. 4

FIG. 5

FIG. 6

FIG. 7

FIG. 8

FIG. 10

FIG. 11

FIG. 12

82a

130

56

104

100

106

108

100

102

80a

82a

98

36

118

120

118

120

84

122

80

122

80

80

86

36

124

126

128

0054008

**FIG. 13**

**FIG. 14**